# EUROPEAN PATENT APPLICATION

(11) **EP 0 739 004 A1**
(43) Date of publication of application: **23.10.1996**
(21) Application number: 96302721.4
(22) Date of filing: 18.04.1996
(51) Int. Cl.: G11B 9/00, G11B 9/04

(54) **High capacity recording device having high density recording media**

(30) Priority: 21.04.1995 JP 120578/95
(71) Applicant: Hewlett-Packard Company, Palo Alto, California 94304 (US)
(72) Inventor: Sakai, Ikuo, Shizuoka-shi, Shizuoka (JP); Saito, Mitsuchika, Kawasaki-shi, Kanagawa (JP)
(74) Representative: Jehan, Robert

(57) **Abstract**

A high density recording device includes a memory medium (10) formed by layering an insulating film (12) on a silicon substrate (11). Information is written to the medium (10) by applying voltage to the insulating film (12) to form a low resistance micro-domain. To read the device, a detector (20) is used to detect the lowered resistance of the insulating film (12).

## Description

The invention relates to a high-capacity recording device. More particularly, the invention relates to a recording medium that is used with such device, and that employs scanning probe technology, such as used with a scanning tunneling microscope (STM) or an atomic force microscope (AFM).

A high-capacity recording device that applies scanning tunneling microscope (STM) or an atomic force microscope (AFM) technology, both of which have a resolution on the order of atoms, uses a variety of recording materials as the recording media. For example, Japanese Patent Application No. 06-270297 discloses the use of an inorganic ferroelectric material having a perovskite crystal structure, such as barium titanate or lead zirconate titanate (PZT) as a recording medium. See also, Applied Physical Letters, Vol. 61, no. 25, pp. 3032-34, which discloses a structure that uses a polymer polyimide Langmuir-Blodgett (LB) film as a recording medium.

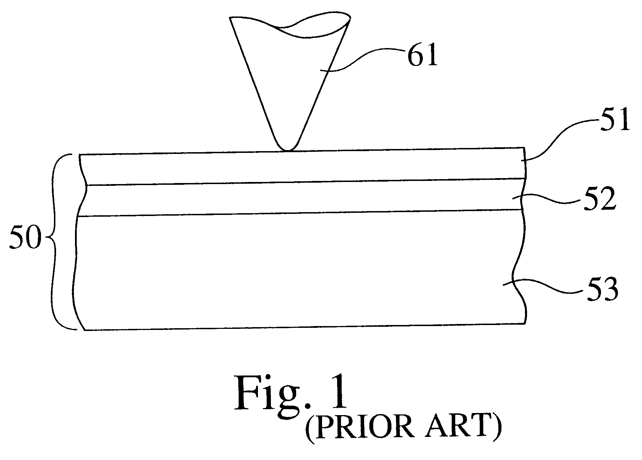

Fig. 1 provides a schematic diagram that describes how a read/write probe element records on, and plays back from, a recording medium in a conventional high-capacity recording device. The figure shows a cross-sectional structure of the recording medium 50. In the figure, the recording layer 51 is either an inorganic ferroelectric material, such as barium titanate or lead zirconate titanate, or a recording material, such as polyimide LB film. The recording layer 51 is formed on an underlying electrode layer 52. A support substrate 53 underlies the electrode layer 52. The end probe tip 61 of the read/write probe element is positioned close to or touching a specific position on the surface of the recording layer 51. A voltage is applied between the probe tip 61 and the underlay electrode layer 52 to record information on, and playback information from, the recording layer.

When an inorganic ferroelectric material is used in the recording layer 51, the probe element 60 is positioned close to or touching the surface of the recording layer 51 during recording. A voltage is applied between the probe tip 61 and the underlying electrode layer 52 to form a reverse polarization area and thereby record information on the recording layer. During playback, the probe tip 61 is moved to a prescribed position on the surface of the recording layer 51 where information was previously recorded. The information is read by detecting the direction of polarization that remains in the recording layer 51.

When a polyimide LB film is used as the recording material of the recording layer 51, a voltage is applied between the probe tip 61 and the underlying electrode layer 52. The resulting current flow changes the electrical resistance of the recording layer 51, thereby recording information on the recording layer. During playback, a voltage smaller than that used during recording is applied between the probe tip 61 and the underlying electrode layer 52. The recorded information is then read out by measuring either the magnitude of current flow or electrical resistance.

The recording layer 51 in this type of conventional high-capacity recording device must have a surface roughness of less than a few nanometers, a highly uniform material composition or film thickness, and a low price. Producing such layer demands the use of an advanced film deposition technology. Unfortunately, such film deposition technology is still unavailable.

Many techniques have been proposed for film deposition of ferroelectric materials, such as PZT. These techniques include, for example metal-organic chemical vapor deposition (MOCVD), sputtering, laser ablation, sol-gel processing, and vacuum deposition. However, even when these methods are used, it is still difficult to form a homogeneous crystal film without the application of an advanced control technology that is still unavailable.

When a polyimide LB film is used as the recording material in the recording layer 51, it is difficult to form a thin film that is free of defects on the underlying electrode layer 52. The fabrication process for the LB film, and the fabrication methods for other structural elements of the high-capacity memory, is both time consuming and unsuited to volume production. Additionally, the durability of LB film is unsatisfactory.

In alternative techniques, molecules or atoms are deposited on the substrate or, conversely, the molecules or atoms are removed from the substrate to form irregularities on the substrate surface. Information thus recorded on the substrate is retrieved by detecting these irregularities. However, it is difficult to supply such molecules or atoms. Furthermore, reading such stored information by scanning the irregular substrate surface is difficult. Finally, the structure of such device is both very complicated and expensive.

It is also known to record information on a substrate by using changes in resistance that are produced by the application of a voltage to produce crystallization of an amorphous thin film of a compound semiconductor such as GeSbTe. Unfortunately, the amount of electrical energy required during writing in this technique is relatively large. Guaranteeing reliability in such devices is difficult. Additionally, because the thin film material is a compound semiconductor, *e.g.* GeSbTe, there are various fabrication problems, such as the need for expensive film deposition equipment.

The present invention seeks to provide improved high density recording.

According to an aspect of the present invention, there is provided a high density recording medium as specified in claim 1.

According to another aspect of the present invention, there is provided a high-capacity recording device as specified in claim 6.

According to another aspect of the present invention, there is provided a method of providing recorded information as specified in claim 9.

The preferred embodiment provides a high density recording device which includes a memory medium formed by layering an insulating film on a silicon substrate. Information is written to the recording device by applying voltage to the insulating film to form a low resistance micro-domain. To read the device, a detector is used to detect the lowered resistance of the insulating film. It is possible to adjust the electric charge injected by such voltage application, without degrading the flatness of the insulating film. Thus, read/write scanning by a single probe is easily implemented. As a result, a high density memory device is realised.

An embodiment of the present invention is described below, by way of example only, with reference to the accompanying drawings, in which:
Fig. 1 is a schematic diagram that provides a cross-sectional view of a conventional high capacity recording device;
Fig. 2 is a schematic diagram that shows the structure of an embodiment of high-capacity recording device; and
Fig. 3 is a schematic diagram that provides a cross-sectional view of the high-capacity recording device of Fig. 2.

The preferred embodiment provides an inexpensive high-capacity memory device based on a high quality, high density recording medium that is easy to fabricate. The high capacity recording device includes a recording layer preferably formed from a silicon compound, such as silicon nitride film or silicon oxide film, or another insulating film on a p-type or n-type silicon substrate. A drive device is provided to drive a conductive probe element for recording information to, and for playing information back from, the recording layer. The probe is scanned from one side of the recording layer to the other while either touching or not touching the recording layer surface. The probe further comprises a device that reads recorded information from the recording layer by detecting either electrical resistance or the magnitude of a current with the probe element during playback.

The system uses an insulating film formed on a p-type or n-type silicon substrate as the recording layer. When the probe is installed opposite the silicon substrate and the silicon substrate is used as an electrode, a voltage applied to the insulating film causes a Fowler-Nordheim current to flow. Consequently, electrons and/or positive holes are injected into the insulating film. By manipulating these electrons and/or positive holes, the chemical bonds in the insulating film are broken to create dangling bonds. As a result, a current path is formed through the electron states corresponding to the dangling bonds and a low resistance develops locally. The effect of lowering the resistance locally is used to write information on the insulating film.

Depending on whether the silicon substrate is p-type or n-type, the probe should be a negative electrode or a positive electrode. When a depletion layer develops on the silicon substrate surface below the probe, the electric field in the insulating film becomes weak. Because positive holes are thought to be more efficient than electrons, it is presently preferred to use a probe that has both a sharp probe tip and a probe side which has a strong electric field as a positive electrode to allow writing to the recording layer at a low voltage.

An electric field is applied locally by the probe with a tip having an extremely small radius of curvature. This area of the recording layer has its resistance lowered by the method described above. Therefore, a low resistance micro-domain is formed in the insulating film, and information can be recorded in that area. During playback, changes caused by recording in the form of an electrical resistance value between the probe and substrate are detected, and information is read based on these detected changes.

Thus, in operation a voltage is applied to a single probe for writing. The voltage must be lowered immediately after the resistance change occurs. Otherwise, the insulating film is destroyed by Joule heat. To lower the voltage immediately after the resistance changes, it is only necessary to place a current control function in the circuit that drives the probe.

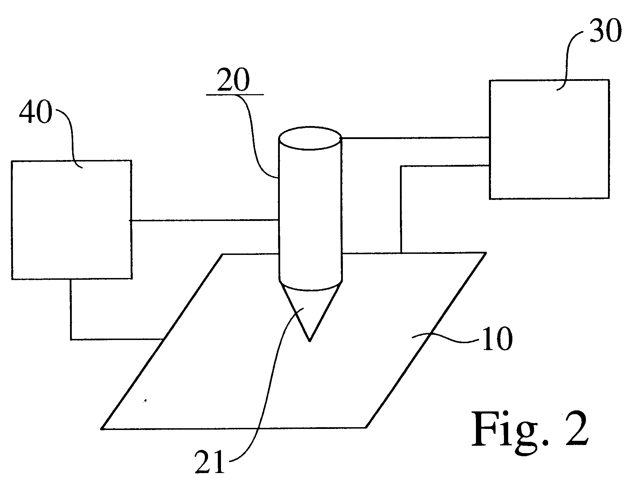

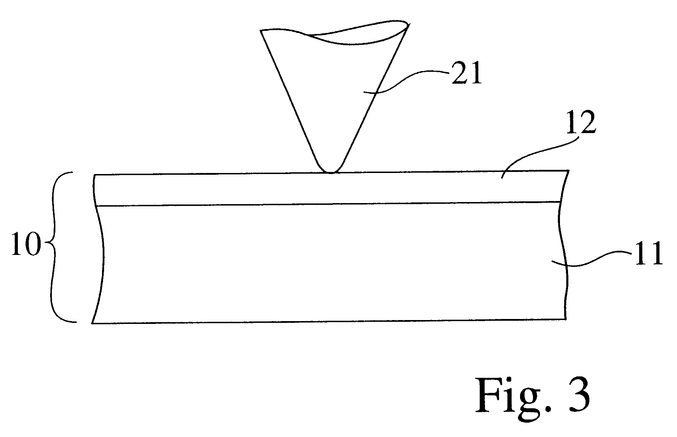

One embodiment of the high-capacity recording device is described while referring to the diagrams. Fig. 2 is a schematic showing the overall structure of one embodiment of the system. Fig. 3 is a schematic showing the state in which the recording medium (cross-sectional view) and the probe element touch to perform recording and playback. In Fig. 2, the probe element 20 is positioned exactly or substantially to touch its tip 21 to the surface of the recording medium 10. A read/write circuit 30 is used to send signals to the probe element 20 during recording and to playback information from the recording medium 10 during playback. A position controller 40 controls the probe element for scanning and precisely positions the probe element in the read/write positions for the recording medium 10. A device such as that disclosed in Laid-Open Patent Application No. 6-70561 in the Official Gazette for Laid-Open Patent Applications can be used as this type of driver. A high-capacity memory device that can use the system is a device disclosed in Japanese Published Unexamined Patent Application No. 6-270297.

In this embodiment a silicon dioxide film is used as the insulating film in the recording medium. However, other insulating films may be used, and the system can be applied by changing the design parameters as needed.

The recording medium 10 shown in Fig. 2 is preferably formed from an n-type silicon substrate 11, as shown in Fig. 3, and a recording layer 12 formed from a silicon dioxide layer on the silicon substrate 11. The probe tip 21 placed at the end of the probe element 20 touches the recording layer 12 with a contact force from some fraction of a nN to several nN. The recording medium 10 is readily provided with a desired thickness and may be uniformly formed over a very wide area by heat hardening the silicon substrate 11 in an oxygen atmosphere. In this way, an extremely smooth surface is obtained. While an n-type silicon may be used for the silicon substrate 11, a similar effect is obtained for p-type silicon.

Other methods, such as chemical vapor deposition (CVD), can be used to form the insulating film. In this embodiment, the recording medium 10 is an n-type silicon that is 500 µm thick, has a resistivity of 0.01 to 0.1 Ω·cm, is heat hardened in an oxygen atmosphere at 900°C for 5 minutes, and forms a 3-nm thick silicon dioxide film.

The voltage applied during recording or playback increases or decreases as the film thickness increases or decreases. In this example, this voltage is 5 volts. In the film thickness range of 0.5 to 3.5 nm, about 5 volts is acceptable, but this depends on the radius of curvature of the probe tip 21. The conductive probe tip 21 of the probe element 20 is in contact with the surface of the recording medium 10 at a contact pressure of about 1 nN. The radius of curvature of the end of the probe tip is 20 to 100 nm. To write in this state, a voltage of 5 volts is applied between the probe element 20 and the silicon substrate 11. At this time, the limiting current is 1 µA. Immediately after reaching the limiting current, entry into the current limiting state is detected, and the applied voltage is returned to 0 volts.

The write operation causes the resistance between the probe element 20 and silicon substrate 11 to become 10 to 100 MΩ. The dimensions of the region with the lowered resistance is about 10 nm. The write voltage and the current limiting parameters can be selected so that thermal changes do not arise in the insulating film and probe. If this is done, degradation in the flatness of the insulating film caused by writing become remarkably small, and the parameters are optimized in the high density memory device.

The regions described above with lowered resistance, *i.e.* the memory cells, are placed at 15-nm intervals on the recording medium 10. When information is played back, a voltage of 1 volt, *i.e*. a voltage smaller than the voltage applied during recording, is applied between the probe element 20 and the silicon substrate 11. The current flowing at this time that exceeds a fixed value is detected, and the recorded information can be read.

The recording medium 10 in which the herein disclosed silicon dioxide film is used as the recording layer 12 can be formed very easily, is uniform over a large area, and has an extremely level surface. In this way, a high-density, high-capacity memory device is easily obtained. For the preferred embodiment, when the area of the silicon substrate is 1.5 cm x 1.5 cm, a memory device with memory cells for 1 Tbits (bit capacity) is obtained.

The preferred embodiment uses an n-type silicon on a silicon substrate 11. However, a p-type silicon can also be used. Further, while the probe tip 21 placed at the end of the probe element 20 is in contact with the recording layer, it does not always have to be in such contact. Even where a gap is opened and a tunnel current flows, the same effect can be obtained. However, in this case precise gap control is required between the end of the probe tip 21 and the surface of the recording layer 12.

In addition to applying a voltage during the playback of information and then detecting a current, the resistance can be detected, or the voltage can be detected by a current drive. However, to prevent writing errors in this case, the voltage is controlled to 1 volt or less. The combination of the performance of the detection means and the relationship between the reference value for the decision and the value before recording can be selected in a variety of ways.

A method other than writing by applying a voltage can also be adopted. For example, a constant electric charge may be charged to capacity and then discharged through the recording layer.

The memory cell herein disclosed can be placed anywhere, and the degree of freedom in design is very high. The system uses a recording medium that has a simple structure, is easy to fabricate, and has a recording layer formed from a high quality silicon dioxide film with a high degree of flatness that is formed on a p-type or n-type silicon substrate by using established technology. This recording layer has almost no degradation in the degree of flatness caused by writing, and the drive device for driving the conductive probe element to scan during recording and playing back is also easily constructed. Consequently, a high-density, inexpensive, high-capacity recording medium and a high-capacity recording device are easily obtained.

The disclosures in Japanese patent application no. 07-120578, from which this application claims priority, and in the abstract accompanying this application are incorporated herein by reference.

## Claims

1. A high density recording medium, comprising a conductive silicon substrate (11); and a recording medium (12) comprising one or more layers of an insulating film formed on said conductive silicon substrate; wherein said recording medium records information by lowering the resistance in a micro-domain of said insulating film.

2. A high density recording medium as in claim 1, wherein said micro-domain is formed by applying a voltage to said insulating film (12).

3. A high density recording medium as in claim 2, wherein the resistivity of said insulating film is lowered by application of said voltage to produce dangling bonds in said micro-domain.

4. A high density recording medium as in any preceding claim, wherein said insulating film is a silicon dioxide insulating film.

5. A high density recording medium as in any preceding claim, wherein said silicon substrate (11) is n-type medium.

6. A high-capacity recording device comprising a conductive silicon substrate (11); a recording medium (12) comprising one or more recording layers formed from an insulating film formed on said conductive silicon substrate; a probe (20) situated proximate to said recording layer; a drive device (40) for driving said probe (20) to scan said recording layer from one side to another; and a read/write circuit (30) coupled to said probe and said conductive silicon substrate to read and write information on said recording layer.

7. A high-capacity recording device as in claim 6, wherein said read/write circuit (30) is operative to apply a voltage to said recording layer to read and write information.

8. A high-capacity recording device as in claim 6 or 7, wherein the recording medium is as in any one of claims 1 to 5.

9. A method of providing recorded information comprising the steps of providing a conductive silicon substrate (11); providing a recording medium (12) with one or more layers of an insulating film formed on said conductive silicon substrate; and recording information on said recording medium by lowering the resistance in a micro-domain of said insulating film.

10. A method as in claim 9, wherein application of voltage to said silicon substrate (11) causes pulse current to flow out of said silicon substrate when it is a p-type medium, and causes said pulse current to flow into said silicon substrate (11) when it is an n-type medium.

11. A method as in claim 9 or 10, comprising the step of applying a voltage of about 5 volt or less to said insulating film.
